Europäisches Patentamt

European Patent Office

Office européen des brevets

(11) Publication number: **0 212 845**
**B1**

(12) **EUROPEAN PATENT SPECIFICATION**

(45) Date of publication of patent specification: 04.10.89

(51) Int. Cl.⁴: **B 62 K 19/12**, B 62 K 19/30, F 16 C 33/12

(21) Application number: 86305503.4

(22) Date of filing: 17.07.86

(54) Bicycle frame and bicycle.

(30) Priority: 14.08.85 GB 8520378
16.08.85 GB 8520562

(43) Date of publication of application:
04.03.87 Bulletin 87/10

(45) Publication of the grant of the patent:
04.10.89 Bulletin 89/40

(84) Designated Contracting States:
BE CH DE FR IT LI NL

(56) References cited:
FR-A-2 245 520
FR-A-2 462 329
GB-A-1 375 014
GB-A-2 101 258
GB-A-2 136 745

(73) Proprietor: Kirk, Francis George
12 Kenworthy Road
Braintree Essex (GB)

(72) Inventor: Kirk, Francis George
12 Kenworthy Road
Braintree Essex (GB)

(74) Representative: Smith, Geoffrey Leonard et al
MARKS & CLERK Friars House 6 - 10 Parkway
Chelmsford Essex CM2 0NF (GB)

Courier Press, Leamington Spa, England.

## Description

This invention relates to bicycle frames.

A bicycle frame conventionally includes a bottom bracket to which are connected the rear forks, the saddle stem and a lower tube.

The bottom bracket also acts as a housing for a crank bearing. A steering bearing is housed in a steering tube (or head) which interconnects the lower tube and an upper tube (in a lady's bicycle) or a cross bar.

French Patent Specification FR—A—2 556 056 discloses a bicycle frame having parts which fit together, over a slve set in the frame at the joint. The parts are arranged to be permanantly fixed together.

In published patent application GB—A—2 136 745, there is shown and described a bicycle frame which is cast in magnesium or other light metal or alloy. This also includes cast-in locations for crank and steering bearings.

The steering bearing is normally formed by an assembly which includes short tubes which are a push fit into the steering tube.

The crank bearing is usually retained in the bottom bracket by means of a threaded engagement onto threads, which are not necessarily continuous, cut in the bottom bracket.

When a bicycle is subjected to heavy use, the crank and steering bearings tend to need replacement at intervals. This entails removal, frequently by unskilled amateurs without the proper tools, of the old bearing and introduction of the new. During this process, the threads in the bottom bracket, or the surfaces needing to make an accurate push fit for the steering bracket, may become damaged. In many such cases, the damage may be irreparable, so the frame has to be scrapped.

In accordance with one aspect of the present invention, there is provided a bicycle frame having at least one location to receive a replaceable component such as a bearing, in which the said at least one location is constituted by a sleeve which is set in the frame and secured by adhesive, and wherein the adhesive is strong enough to hold the sleeve during normal operation, the adhesive is non-metallic and susceptible of softening to enable the sleeve to be replaced when required.

The invention is particularly suited to a frame which is cast in magnesium or an alloy, and in such a case, the sleeve may be of steel.

A bicycle frame conventionally includes a saddle stem which has an expandable open tubular upper end which receives a saddle support tube and is clamped thereover to secure the saddle in an adjusted position. The saddle support tube is normally a tight sliding or interference fit in the upper end of the saddle stem, so that some fairly vigorous effort is required to move the support tube to the required adjusted position, particularly if the position has not been adjusted for some considerable time.

When the saddle position is adjusted in a cast magnesium bicycle frame, or when the saddle is replaced, the inner surface of the open upper end of the cast magnesium saddle stem may become damaged by the movement of the saddle support tube, particularly if the latter is removed completely and re-introduced. In many such cases, the damage may be irreparable, so the frame has to be scrapped. Also, the saddle support tube is frequently of aluminium, and the current fashion is for this to have external flutes, which have a largely aesthetic, rather than technical, effect. These flutes do not extend the full length of the support tube. They have the effect of allowing a small amount of water to enter the open top of the saddle stem and become trapped between the support tube and the interior of the saddle stem.

This water may set up electrolytic corrosion by forming an electrolytic cell in conjunction with the magnesium of the frame and the aluminium of the saddle support tube.

In view of its considerable length, this liner sleeve is preferably an easy push fit in the frame at working temperatures.

It is preferred to use one of the modern ultra-strong adhesives in order to achieve the required strength, and to choose one that softens when heated, e.g. by a radio frequency heater, to a temperature above the normal working temperature of the bearing, say 200°C. A suitable adhesive would be LOCTITE (Registered Trade Mark) 601.

It will however be understood that the invention is not limited to cast magnesium frames, but may also be applied to more conventional forms of frame.

The sleeve may have threads cut therein, or it may be smooth to receive bearing parts as a push or interference fit.

The sleeve or sleeve liner may be a push fit in the frame at normal ambient temperatures, and the release of the sleeve by softening the adhesive by heating may be enhanced by differential thermal expansion between the sleeve or sleeve liner and the surrounding metal.

The invention will be further described with reference to the accompanying drawings, in which;

Figure 1 is a side elevation of a cast bicycle frame to which the invention is applied;

Figure 2 is a section on the line II—II of figure 1;

Figure 3 is a section on the line III—III of figure 1 omitting an insert;

Figure 4 is a partial elevation on the arrow IV of figure 1;

Figure 5 is an elevation of an insert; and Figure 6 is a section on the line VI—VI of figure 1.

The cast magnesium bicycle frame illustrated is of a type generally described in the above-mentioned published application, and includes a cross bar 1 of I section with lightening holes 2, a lower bar 3 of C section closed by a second casting forming a panel 4, a tubular head 5 and a saddle stem 6 of V section with lightening holes 7. The lower bar 3 joins the saddle stem 6 at an intermediate position, well above a location 8, replacing a bottom bracket, to receive a crank bearing.

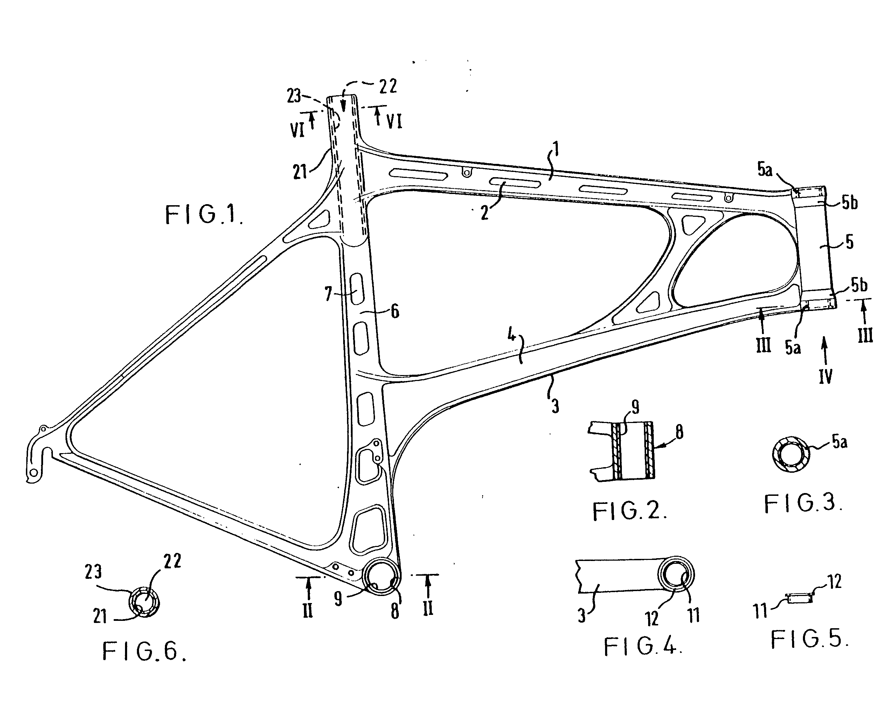

The location 8 is pressure die-cast in magnesium, with the rest of the frame, but in order to make it durable enough to allow removal and replacement of the crank bearing, there is provided a steel liner 9 (see also figure 2) which is a push fit and is secured by an ultra-strong adhesive which can be softened by application of localised heat, e.g. by an RF heater, to enable replacement of the liner in the event it becomes damaged in use. The differential thermal expansion as between the steel liner 9 and the magnesium location 8 further assists in loosening the liner 9 for easy removal. The steel liner 9 has threads cut in it to secure the crank bearing.

The head 5 provides a location at each end for a short tubular bearing part push-fitted therein, and for this purpose, it has slightly enlarged end parts 5a linked by tapering parts 5b to the main length of the head 5. Figure 3 shows the shape of the enlarged end parts 5a.

In order to enable the replacement of the steering bearing assembly, without damage to the magnesium of the head 5, there is provided in each enlarged end part 5a of the head 5, a push-fitted steel liner 11 (see also figures 4 and 5) with an end flange 12. This liner 11 is also secured by an ultra-strong adhesive which can be softened by application of localised heat, e.g. by an RF heater, to enable the ready replacement of the liner 11.

The saddle stem 6 has an upper part 21 provided with a upwardly open tubular portion 22 to receive a conventional saddle support tube (not shown), which is normally of aluminium.

In order to make upper portion 22 of the saddle stem 6 durable enough to allow removal and replacement of the saddle support tube, and also to protect it against electrolytic corrosion, it is provided with an aluminium liner sleeve 23 (see also figure 6) which is an easy push fit and is secured by an ultra-strong adhesive which can be softened by application of localised heat to enable replacement of the liner sleeve 23 in the event it becomes damaged in use. The differential thermal expansion as between the aluminium liner sleeve 23 and the magnesium of the saddle stem 7 further assists in loosening the liner sleeve 23 for easy removal.

The presence of the liner sleeve 23 in the tubular portion 22 also seals the tubular portion 22 against ingress of water.

Various modifications may be made within the scope of the claims.

## Claims

1. A bicycle frame having at least one location (8, 21) to receive a replaceable component, in which said at least one location (8, 21) is constituted by a sleeve (9, 11, 23) which is set in the frame and secured by adhesive, and wherein the adhesive is strong enough to hold the sleeve (9, 11, 23) during normal operation characterised in that the adhesive is non-metallic and susceptible of softening to enable the sleeve (9, 11, 23) to be replaced when required.

2. A bicycle frame according to claim 1 characterised by having a saddle stem (6) with a cast-in open upper end (22) to receive a saddle support tube so as to be clamped thereover, the said open upper end (22) is provided with a liner sleeve (23) which is set in the open upper end (22) and secured by adhesive.

3. A bicycle frame according to claim 1 or 2, characterised in that the frame is cast in magnesium or an alloy thereof.

4. A bicycle frame according to claim 3, characterised in that the sleeve (9, 11, 23) is of steel.

5. A bicycle according to any of claims 1 to 4, characterised in that the sleeve (9, 11, 23) has threads cut therein.

6. A bicycle frame according to any of the preceding claims, characterised in that the sleeve (9, 11) or sleeve liner (23) is a push fit in the frame at normal ambient temperatures.

7. A bicycle according to claim 2, characterised in that the liner sleeve (23) is of aluminium.

8. A bicycle frame according to claim 7, characterised in that the sleeve (23) liner is an easy push fit in the upper end (22) of the saddle stem (6).

9. A bicycle frame according to any of the preceding claims, characterised in that the adhesive is softenable by heating to a temperature in the region of 200°C.

## Patentansprüche

1. Fahrradrahmen mit wenigstens einem Bereich (8, 21) zur Aufnahme einer auswechselbaren Komponente, bei dem der genannte wenigstens eine Bereich (8, 21) durch eine Hülse (9, 11, 23) gebildet ist, die in dem Rahmen eingesetzt und durch Haftmittel gesichert ist und bei dem das Haftmittel eine zum Halten der Hülse (9, 11, 23) während der normalen Betriebsweise ausreichende Haftkraft aufweist, dadurch gekennzeichnet, daß das Haftmittel nicht metallisch, aber erweichbar ist, damit die Hülse (9, 11, 23) bei Bedarf auswechselbar ist.

2. Fahrradrahmen nach Anspruch 1, gekennzeichnet durch einen Sattelschaft mit einem eingegossenen oberen Ende (22) zur Aufnahme eines Sattelstützrohrs so, daß er über diesem verklemmt werden kann, woei das genannte offene obere Ende (22) mit einer Auskleidungshülse (23) versehen ist, die in das obere offene Ende (22) eingesetzt und in diesem durch Haftmittel gesichert ist.

3. Fahrradrahmen nach Anspruch 1 oder 2, dadurch gekennzeichnet, daß der Rahmen ein Gußstück aus Magnesium oder einer Magnesiumlegierung ist.

4. Fahrradrahmen nach Anspruch 3, dadurch gekennzeichnet, daß die Hülse (9, 11, 23) aus Stahl besteht.

5. Fahrzeugrahmen nach irgendeinem der Ansprüche 1 bis 4, dadurch gekennzeichnet, daß die Hülse (9, 11, 23) darin eingeschnittene Gewindegänge aufweist.

6. Fahrradrahmen nach irgendeinem der vorstehenden Ansprüche, dadurch gekennzeichnet, daß die Hülse (9, 11) oder die Hülsenauskleidung (23) in dem Rahmen bei normalen Umgebungstemperaturen mit einem Schiebesitzt angeordnet ist.

7. Fahrradrahmen nach Anspruch 2, dadurch gekennzeichnet, daß die Auskleidungshülse (23) aus Aluminium besteht.

8. Fahrradrahmen nach Anspruch 7, dadurch gekennzeichnet, daß die Auskleidungshülse (23) einen leichten Schiebesitz in dem oberen Ende (22) des Sattelschaftes (6) aufweist.

9. Fahrradrahmen nach irgendeinem der voranstehenden Ansprüche, dadurch gekennzeichnet, daß das Haftmittel durch Erhitzen auf eine Temperatur im Bereich von 200°C erweichbar ist.

**Revendications**

1. Cadre de bicyclette comportant au moins un emplacement (8, 21) pour recevoir un compasant remplaçable, dans lequel un tel emplacement (8, 21) est constitué par un manchon (9, 11, 23) qui est disposé dans ledit cadre et fixé à l'aide d'une substance adhésive, et dans lequel la substance adhésive est suffisamment résistante pour maintenir le manchon (9, 11, 23) en fonctionnement normal, caractérisé par le fait que la substance adhésive est non métallique et est susceptible d'être ramollie de façon à permettre le remplacement du manchon (9, 11, 23), si nécessaire.

2. Cadre de bicyclette selon la revendication 1, caractérisé par le fait qu'il comprend un tronc (6) de selle dont, l'extrémité supérieure (22) a une forme ouverte pour recevoir un tube support de selle de façon à l'y brider, ladite extrémité supérieure ouverte (22) étant munie d'un manchon (23) formant fourreau qui est disposé dans l'extrémité supérieure auverte (22) et y est fixé à l'aide d'une substance adhésive.

3. Cadre de bicyclette selon l'une des revendications 1 ou 2, caractérisé par le fait que le cadre est formé en magnésium ou en un alliage de magnésium.

4. Cadre de bicyclette selon la revendication 3, caractérisé par le fait que le manchon (9, 11, 23) est en acier.

5. Cadre de bicyclette selon l'une des revendications 1 à 4, caractérisé par le fait que le manchon (9, 11, 23) est fileté en son intérieur.

6. Cadre de bicyclette selon l'une quelconque des revendications précédentes, caractérisé par le fait que le manchon (9, 11) ou le manchon formant fourreau (23) sont emboîtés dans le cadre à température ambiante normale.

7. Cadre de bicyclette selon la revendication 2, caractérisé par le fait que le manchon formant fourreau (23) est en aluminium.

8. Cadre de bicyclette selon la revendication 7, caracérisé par le fait que le manchon formant fourreau (23) s'emboîte facilement dans l'extrémité supérieure (22) du tronc de selle (6).

9. Cadre de bicyclette selon l'une quelconque des revendications précédentes, caractérisé par le fait, que la substance adhésive peut être ramollie par chauffage à une température aux environs de 200°C.

FIG.1.

FIG.2.

FIG.3.

FIG.4.

FIG.5.

FIG.6.

EP 0 212 845 B1